# EUROPEAN PATENT APPLICATION

(11) **EP 0 818 384 A1**
(43) Date of publication of application: **14.01.1998**
(21) Application number: 96830389.1
(22) Date of filing: 11.07.1996
(51) Int. Cl.: B62H 1/00, B62H 3/08, B62H 3/10

(54) **Antitheft device for bicycles**

(71) Applicant: Società per la Promozione della Pubblicità Esterna S.r.l., 20121 Milano (IT)
(72) Inventor: Maestro, Pierandrea, 20122 Milano (IT); Nuvoloni, Antonio, 20158 Milano (IT)
(74) Representative: Gislon, Gabriele

(57) **Abstract**

An anti-theft device for bicycles comprises: a means of lodging and supporting a bicycle wheel; a retaining base; an element locked to said retaining base and rotating on its own axle, to which a means of retention of at least a wheel of the bicycle is attached solidly and rotably from a resting position to a working position, together with an arm to retain the frame of the bicycle. The invention further provides for a curved element which can be reversibly fixed to said arm, and serves to prevent unapproved removal of the frame of the bicycle from the retaining base.

## Description

The present invention relates to an anti-theft device for bicycles. In particular, the invention relates to an anti-theft device of the type that allows a bicycle to be locked to a means of attachment disposed on a fixed support.

Known anti-theft devices for bicycles commonly comprise steel chains or cables whose extremities can be locked together with a padlock. These anti-theft devices are inconvenient and bulky to transport and don't guarantee effective protection.

A second problem arises from the fact that the existing anti-theft devices only lock the frame and one of the wheels to a fixed support and leave the front wheel free to be removed.

The European Patent Application No. 0 534 928 describes an anti-theft device for bicycles capable of locking the frame and both wheels. The said device consists of three U-shaped elements arranged beside the parking position of the bicycle which can be manually rotated to bear against both wheels. There is also a telescoping arm fitted with a U-shaped element which can be rotated from a resting position to clamp the frame with a padlock. In completing this rotation the arm causes a bar in the pavement to translate and lock the said three U-shaped elements by means of sideways projecting teeth on the same bar, preventing the said elements from being rotated. To release the bicycle the above operations must be carried out in reverse. This embodiment, while locking both wheels and frame, is very complex to perform, decidedly expensive and subject to malfunction because of the large number of components. Furthermore, it requires expensive and complicated work to install on the pavement.

The European Patent Application No. 0 587 452 describes an anti-theft device for bicycles composed by a first element shaped in such a way as to receive a wheel of the bicycle and a second element which locks the frame of the bicycle, both elements fixed to the ground. The second element comprises a fixed vertical arm and a telescopic L-shaped arm that can move vertically and whose horizontal portion is locked to the vertical arm with a padlock thus blocking the frame of the bicycle. The disadvantages of this arrangement are that the padlock could be easily broken and that the wheels can both be removed. Also this realization requires complex installation work.

The purpose of the present invention is to resolve the aforementioned problems by means of an anti-theft device for bicycles that is able to prevent the theft of the whole bicycle or of the wheels.

Another purpose is that of producing an anti-theft device for bicycles that is simple and inexpensive to build, that is easier to use than present devices, and that frees the cyclist from having to carry round uncomfortable and bulky objects.

Such objectives are achieved by the present invention which relates to an anti-theft device for bicycles characterized by comprising: a means of receiving and supporting a wheel of the bicycle; a retaining base; an element locked to the said base and rotating about its own axis, to which a means of retaining at least one wheel of the bicycle, together with a locking bar to retain the frame of the bicycle, is attached solidly and the assembly rotates together from a resting position to a locking position; said device further comprising a means of locking the said bicycle frame to the said locking bar.

According to a preferential aspect of the present invention, the adjustable anti-theft device is characterized by the said means of locking the frame to the said arm comprise a curved element having a straight portion housed in said arm and a curved portion engaging the said frame, and a means of reversibly fixing the said curved element to the said arm.

According to another expect of the invention, said means of fixing said curved element comprise at least one through-hole on the said arm and a plurality of holes drilled on the straight portion of said curved element which can be aligned with said hole or holes on the arm, and a lock which can be inserted in said holes and equipped with a means of expanding anchorage; furthermore, said means of anchorage are protected, when closed, inside said arm.

According to a further preferential aspect of the present invention said means of retention of at least one wheel of the bicycle comprises a hook integral with said rotating element.

According to another preferential aspect of the present invention said retaining base is fixed and housed partially in a concrete block, and said means of lodging and support for a wheel of bicycle comprises a slot in the said block. Furthermore, said concrete blocks are provided with means of locking said slots for lodging the bicycles together to form a rack of anti-theft devices.

The anti-theft device for bicycles according to the present invention offers the advantage in the first place of simultaneously locking both the frame and the wheels of the bicycle to a fixed support, particularly the front wheel which is the easier to remove.

A second advantage is given by the curved element fixed to the arm being set at a certain height, which also forces the back wheel against the ground, jamming it completely.

A third advantage derives from structure of the rotating element which is such as to prevent the padlock from being damaged or broken deliberately, guaranteeing better security.

An further advantage is that use of this anti-theft device doesn't involve the use of bulky means to transport, since it is sufficient that the cyclist carries an element of such form that can be attached conveniently to the rear of the frame while the bicycle is in use. The anti-theft device according to the present invention is thus simple and convenient to use.

Finally, the anti-theft device involves low installation costs compared to known techniques, nor does it present the problems of malfunction and/or breakdown of the prior art.

The invention will now be described in more detail with reference to the attached drawings which are illustrative but non-limiting in nature and in which:
- figure 1 is a perspective view of the elements that compose one of the preferential embodiments of the anti-theft device for bicycles according to the present invention;
- figures 2.a and 2.b show respectively a view and a section in perspective of a bicycle locked to a retaining base through the anti-theft device according to the present invention;
- figure 3 is a view in perspective of the conformation of the arm fixed solidly to the rotating element;
- figures 4.a and 4.b show respectively a top view and a view from the lower part of a concrete block fitted with the anti-theft device according to the present invention; and
- figure 5 shows, in partial section, the barrel lock inserted in the arm to lock the curved element.

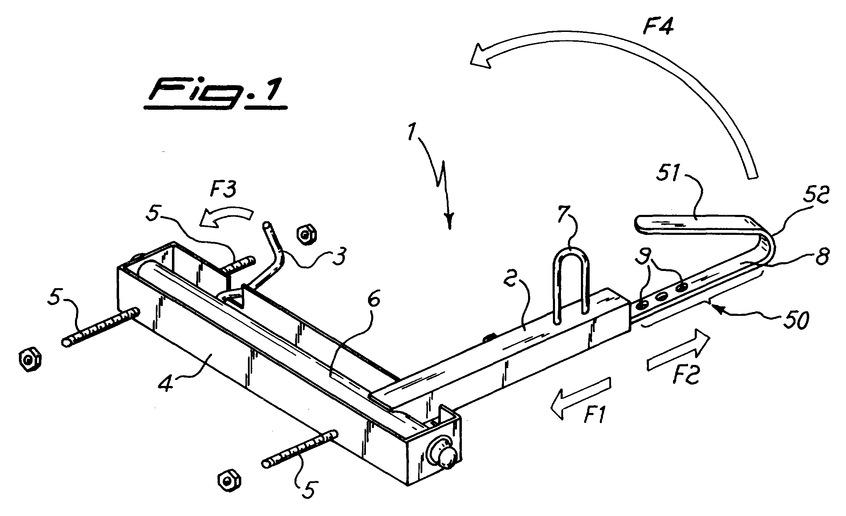

Figure 1 shows the anti-theft device 1 for bicycles in one of the preferential embodiments of the present invention.

The anti-theft device 1 is composed of a retainer base comprising a box 4 provided with a means of permanent anchorage 5. A rotating element 6 is fitted inside the box 4. An arm 2 provided with handle 7 and, in a more distant position, a hook 3 is connected to this element 6.

The arm 2 and the hook 3 are integral with the element 6 and rotate with it.

A curved element 8 is a sliding fit in a first chamber 45 (see figure 3) of the arm 2. The curved element 8 is composed of an initial straight portion 50 provided with holes 9 and a second portion 51 connected to the first by the elbow 52. The folding to elbow 52 is such that the second portion 51 is not perfectly parallel to the first 50, but is slightly angled towards it. Preferably, the curved element 8 is in iron or steel bar stock.

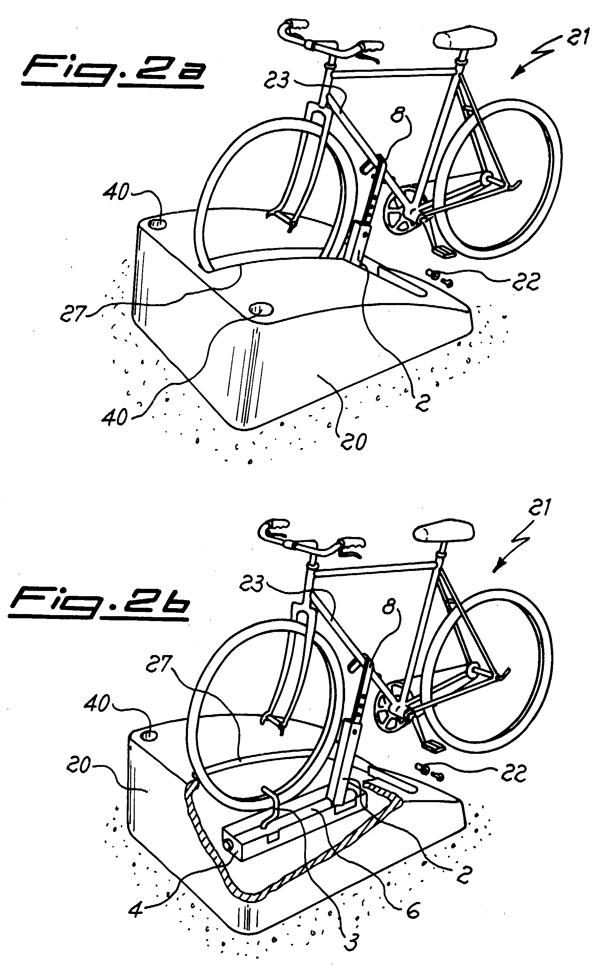

Figure 2.a shows a view in perspective of a bicycle 21 locked to a block 20 by the anti-theft device according to the present invention. The block 20 contains a slot 27 that accepts at least one bicycle wheel 21 and within which is fitted the box 4 containing the element 6. The arm 2 is shown in a substantially vertical position and locking the frame 23 of the bicycle 21 by means of the curved element 8. The curved element 8 is locked in turn to the arm 2 by means of the barrel lock 22. By substantially vertical position of the arm 2 is understood a position inclined at some degrees to the vertical.

Figure 2.b shows in cutaway the anti-theft device according to the invention inside the block 20. In particular, the means of retention of the bicycle wheel are visible, consisting of the hook 3 integral with said element 6, and the box 4.

Preferably, said block 20 is a concrete block weighing between 150 kg and 300 kg.

A plurality of said concrete blocks 20 may be linked in such a way as to keep the bicycle insertion slots 27 parallel, to form a rack of anti-theft devices. The blocks 20 are joined together by means of connecting elements (not shown) inserted in the holes 40.

Figure 3 shows in perspective the form of the rotating arm 2. The arm 2 has a substantially rectangular section and is divided by the partition 12 along its the own length.

The partition 12 contains a hole 11, in line with a similar hole 10 in the side 13 so that the hole 10 and the hole 11 are coaxial. The partition 12 creates inside the arm 1, a first and a second chamber, and the second chamber, which is entirely hollow is permanently closed by a portion 14.

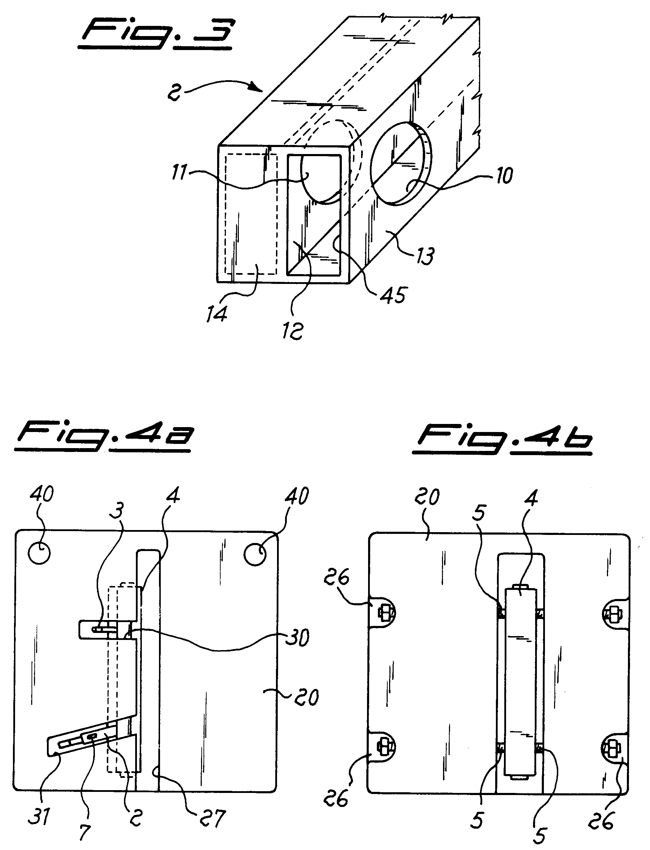

Figure 4.a shows a top view of a concrete block 20 with the anti-theft device according to the present invention.

There is a slot 27 which accepts at least one bicycle wheel, and two slots 30 and 31 that respectively allow the rotation of the hook 3 and of the arm 2. The slot 31 is angled slightly away from the perpendicular to the slot 27. Fig.4a also shows the holes 40 that allow the insertion of the connecting elements between blocks 20.

Figure 4.b shows the underside of the block 20 which houses the box 4 anchored by means of the ties 5, set into the retaining base, to svitable tie centers 26.

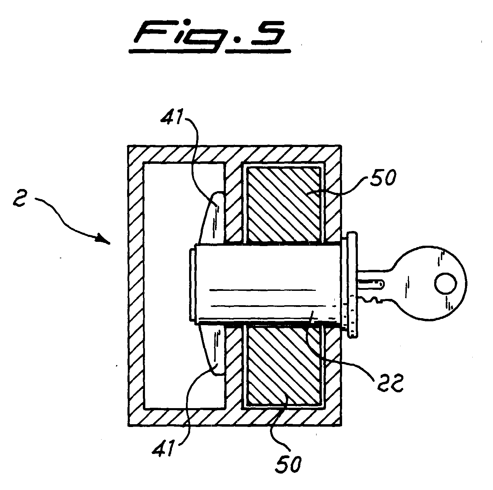

Figure 5 shows in section, the arm 2 in which the barrel lock 22 has been inserted and locked. The lock 22 has been inserted through the hole 10 in the side 13, through one of the holes in the straight portion 50 of the curved element 8 and into the hole 11 in the partition 12. The lock 22 is fixed in position by means of the expanding anchorage lugs 41 which bear against the side of the partition 12 opposite the sliding curved element 8. This blocks the movement of the curved element 8 in the first channel 45 of the arm 2. The anchorage lugs 41 of the barrel lock 22 are protected against interference with breaking tools by the closed portion 14 which blocks the second chamber of the arm 2.

To use the anti-theft device according to the present invention, put the wheel of the bicycle 21 in the slot 27 and grip the arm 2 by the handle 7, rotate said arm 2 in the direction of the arrow F4 of figure 1 to bring it into a substantially vertical position. Rotating the arm 2 causes a corresponding rotation of the element 4 which causes the simultaneous rotation of the hook 3 as shown by the arrow F3, so that said hook 3 locks the bicycle wheel 21.

When the arm 2 is in a substantially vertical position, the curved element 8 can be inserted into the first chamber 45 of the arm 2. The curved element 8 can slide in the directions indicated by the arrows F1 and F2 and be positioned to lock the frame 23 of the bicycle 21.

To fix the curved element 8 to the arm 2 the lock 22 is inserted into the hole 10 on the side 13 of the arm 2. The lock passes through one of the plurality of holes in the straight portion 50 of said curved element 8 and finally through the hole 11 in the partition 12, coaxial with the hole 10 (see fig.5). The lock 22 is equipped with a means of expanding anchorage 41 which bears against the partition 12 on the side opposite the element 8. The means of anchorage 41 of the lock 22 is therefore inside said second chamber of the arm 2, which is hollow but closed permanently by the portion 14. This configuration of the arm 2 prevents the lock 22 from being forced or deliberately broken by safeguarding the anchorage lugs 41 from interference with breaking tools.

The adjustment of the locking position of the arm 2 is achieved by selecting which of the holes 9 on the straight portion 50 of the element 8 to bring into alignment with the holes 10 and 11 on the arm 2 when locking with barrel lock 22. This adjustment, in addition to the particular shape of the curved element 8 described above, allows various types and sizes of frames to be locked.

The curved element 8, while constituting an integral part of the anti-theft device according to the present invention, is generally owned and carried around by the user together with the lock 22 and key, and could be conveniently clipped to the bicycle frame during normal use of the bicycle.

Alternatively, the curved element 8 could be slid into the inside of the arm 2 but not be detachable from it, while the lock 22 and the related key are carried by the user.

In an alternative embodiment of the present invention, the handle 7 on the arm 2 comprises a U-shaped bar whose two pegs are inserted into holes along a line substantially perpendicular to the long side of the arm. In this way, when the anti-theft device is closed, a portion of the said curved element, opposite to the straight portion with holes, could be inserted into the said U-shaped space. In such a solution, therefore, the second part of the elbow 51 of the element 8 is lengthened. This allows the frame of the bicycle 21 to be locked completely inside a fully closed circuit formed by the element 8, a portion of the arm 2 and by the pegs of the U-shaped handle. This solution prevents the bike being stolen by someone deflating the tyres of the bicycle 21 to create sufficient play between the elbow 52 and the frame 23 to remove the frame 23 from the curved element 8.

A solution similar to that previously described provides for the arm 2 to have a third chamber parallel to and side by side with the second chamber; said third chamber being hollow and open ended in such a way as to receive the straight portion 51 of the curved element 8, to complete the locking circuit similarly to that described above .

## Claims

1. Anti-theft device for bicycles characterized by comprising: a means of lodging and supporting a bicycle wheel ; a retaining base; an element locked to said retaining base and rotating on its own axis, to which rotating element a means of retaining at least one wheel of the bicycle, together with an arm to retain the frame of the bicycle is solidly attached and rotates with it from a resting position to a working position ; said device further comprising means of locking said frame to the said retaining arm.

2. Device according to Claim 1, characterized by the said means for locking the frame to the said arm comprising a curved element provided with a straight portion housed in said arm and with a curved portion bearing against said frame, and means for reversibly fixing the said curved element to the said arm.

3. Device according to Claim 2, characterized by the said means of fixing of said curved element comprising at least one hole on the said arm, a plurality of holes on the straight portion of said curved element, which can be aligned with said hole or holes on the arm, and a lock which can be inserted in said holes and equipped with an expanding means of anchorage.

4. Device according to Claim 3, characterized by said lock being lodged in a protected way inside said arm.

5. Device according to Claim 4, characterized by said interior of said arm being divided along its length by a partition provided with a hole, and said partition dividing said arm interior into a first and a second longitudinal chamber.

6. Device according to Claim 5, characterized by said lock being capable of being inserted in a hole defined by the coaxial correspondence of the hole on the said arm with one of the holes on the said curved element and with the hole on the said partition and by the said means of expanding anchorage, when locked, being situated on the inside of the said second chamber.

7. Device according to one of the preceding Claims, characterized from the fact that said curved element is in steel or iron flat barstock

8. Device according to one of the preceding Claims, characterized by said arm being provided with a handle or hilt.

9. Device according to Claim 8, characterized by said handle being U-shaped in form and bearing against the free portion of the said curved element when the anti-theft device is closed.

10. Device according to one of the preceding Claims, characterized by said means of retention of at least one bicycle wheel being constituted by a hook which is integral with said element.

11. Device according to one of the preceding Claims, characterized by said retaining base being fixed and lodged partially in a concrete block, and that said means of lodging and supporting a bicycle wheel being constituted by a slot in said block.

12. Device according to Claim 11, characterized by said concrete blocks being provided with a means of locking the same together to form a rack of anti-theft devices.
